# EUROPEAN PATENT APPLICATION

(11) **EP 3 309 669 A1**
(43) Date of publication of application: **18.04.2018**
(21) Application number: 16861246.3
(22) Date of filing: 23.05.2016
(51) Int. Cl.: G06F 3/0481

(54) **INPUT SEQUENCE PROCESSING METHOD, APPARATUS, DEVICE, AND NON-VOLATILE COMPUTER STORAGE MEDIUM**

(30) Priority: 03.11.2015 CN 201510736672
(71) Applicant: Baidu Online Network Technology (Beijing) Co., Ltd., Beijing 100085 (CN)
(72) Inventor: TAN, Longzhi, Beijing 100085 (CN)
(74) Representative: dompatent von Kreisler Selting Werner - Partnerschaft von Patent- und Rechtsanwälten mbB
(86) International application number: PCT/CN2016/083005
(87) International publication number: WO 2017/075974

(57) **Abstract**

The present disclosure provides a method and apparatus for processing an input sequence, an apparatus and a non-volatile computer storage medium. In the embodiments of the present disclosure, the user's input sequence in the application is obtained, then an extended sequence is obtained according to the input sequence and the user's user feature data, so that the extended sequence can be used to adjust the input sequence to obtain an adjusted sequence so that the application uses the adjusted sequence to perform an application-related operation. Since the application-related operation is executed no longer completely depending on the input sequence input by the input method application and thoughts are given to the extended sequence obtained according to the input sequence and the user's user feature data, the operation result can substantially satisfy the user's operation intention. Hence, it is possible to avoid the problem in the prior art about the increase of the data interaction between the application and the application-used processing engine caused by the user browsing the operation result again and again or inputting again and again using the input method application, thereby reducing the processing burden of the search engine.

## Description

The present disclosure claims priority to the Chinese patent application No.201510736672.3 entitled "Method and Apparatus for Processing Input Sequence" filed on the filing date November 3, 2015, the entire disclosure of which is hereby incorporated by reference in its entirety.

### Field of the Disclosure

The present disclosure relates to input method technologies, and particularly to a method and apparatus for processing an input sequence, an apparatus and a non-volatile computer storage medium.

### Background of the Disclosure

Applications (APPs) such as Windows application, Android application and ios application generally require a user to perform information input through an input method application. Generally, the input method application may, according to the user-input character sequence, displays to the user several candidates corresponding to the character sequence so that the user select one candidate as the input sequence and perform on-screen operation.

However, an operation result obtained by executing an application-related operation completely depending on the input sequence input by the input method application might fail to satisfy a real operation intention of the user, for example, the user cannot accurately provide an operation intention such as a search query needed by a search-like application, so that the user has to browse the operation result again and again or input again and again using the input method application, to obtain an operation result that satisfies the operation intention. This increases data interaction between the application and a processing engine used by the application and thereby causes the increase of the processing burden of the processing engine.

### Summary of the Disclosure

A plurality of aspects of the present disclosure provide a method and apparatus for processing an input sequence, an apparatus and a non-volatile computer storage medium to reduce the processing burden of the processing engine.

According to an aspect of the present disclosure, there is provided a method for processing an input sequence, comprising:
obtaining the user's input sequence in an application;
obtaining an extended sequence according to the input sequence and the user's user feature data;
using the extended sequence to adjust the input sequence to obtain an adjusted sequence so that the application uses the adjusted sequence to perform an application-related operation.

The above aspect and any possible implementation mode further provide an implementation mode: the user's user feature data includes at least one of the following data:
user attribute data; and
environment data of a terminal.

The above aspect and any possible implementation mode further provide an implementation mode: before obtaining the extended sequence according to the input sequence and the user's user feature data, the method further comprises:
obtaining the user's user feature data according to the user's application data, the user's application data including at least one of the user's input data and terminal data of the terminal.

The above aspect and any possible implementation mode further provide an implementation mode: the using the extended sequence to adjust the input sequence to obtain an adjusted sequence comprises:
adding the extended sequence to the input sequence to obtain the adjusted sequence; or
modifying the input sequence according to the extended sequence to obtain the adjusted sequence.

The above aspect and any possible implementation mode further provide an implementation mode: the obtaining an extended sequence according to the input sequence and the user's user feature data comprises:
if an input scenario of the application is a search input, obtaining the extended sequence according to the input sequence and the user's user feature data.

According to another aspect of the present disclosure, there is provided an apparatus for processing an input sequence, comprising:
an obtaining unit configured to obtain the user's input sequence in an application;
an extending unit configured to obtain an extended sequence according to the input sequence and the user's user feature data;
an adjusting unit configured to use the extended sequence to adjust the input sequence to obtain an adjusted sequence so that the application uses the adjusted sequence to perform an application-related operation.

The above aspect and any possible implementation mode further provide an implementation mode: the user's user feature data includes at least one of the following data:
user attribute data; and
environment data of a terminal.

The above aspect and any possible implementation mode further provide an implementation mode: the apparatus further comprises an analyzing unit configured to:
obtain the user's user feature data according to the user's application data, the user's application data including at least one of the user's input data and terminal data of the terminal.

The above aspect and any possible implementation mode further provide an implementation mode: the adjusting unit is specifically configured to:
add the extended sequence to the input sequence to obtain the adjusted sequence; or
modify the input sequence according to the extended sequence to obtain the adjusted sequence.

The above aspect and any possible implementation mode further provide an implementation mode: the extending unit is specifically configured to:
if an input scenario of the application is a search input, obtain the extended sequence according to the input sequence and the user's user feature data.
According to a further aspect of the present disclosure, there is provided an apparatus, comprising
one or more processors;
a memory;
one or more programs stored in the memory and configured to execute the following operations when executed by the one or more processors:
   obtaining the user's input sequence in an application;
   obtaining an extended sequence according to the input sequence and the user's user feature data;
   using the extended sequence to adjust the input sequence to obtain an adjusted sequence so that the application uses the adjusted sequence to perform an application-related operation.

According to a further aspect of the present disclosure, there is provided a non-volatile computer storage medium in which one or more programs are stored, an apparatus being enabled to execute the following operations when said one or more programs are executed by the apparatus:
obtaining the user's input sequence in an application;
obtaining an extended sequence according to the input sequence and the user's user feature data;
using the extended sequence to adjust the input sequence to obtain an adjusted sequence so that the application uses the adjusted sequence to perform an application-related operation.

As known from the above technical solutions, in the embodiments of the present disclosure, the user's input sequence in the application is obtained, then an extended sequence is obtained according to the input sequence and the user's user feature data, so that the extended sequence can be used to adjust the input sequence to obtain an adjusted sequence so that the application uses the adjusted sequence to perform an application-related operation. Since the application-related operation is executed no longer completely depending on the input sequence input by the input method application and thoughts are given to the extended sequence obtained according to the input sequence and the user's user feature data, the operation result can substantially satisfy the user's operation intention. Hence, it is possible to avoid the problem in the prior art about the increase of the data interaction between the application and the application-used processing engine caused by the user browsing the operation result again and again or inputting again and again using the input method application, thereby reducing the processing burden of the search engine.

In addition, with the technical solution provided by the present disclosure being employed, since the application-related operation is executed no longer completely depending on the input sequence input by the input method application and thoughts are given to the extended sequence obtained according to the input sequence and the user's user feature data, the operation result can substantially satisfy the user's operation intention, and therefore, effectiveness of the operation result can be effectively improved.

In addition, with the technical solution provided by the present disclosure being employed, since the application-related operation is executed no longer completely depending on the input sequence input by the input method application and thoughts are given to the extended sequence obtained according to the input sequence and the user's user feature data, the operation result can substantially satisfy the user's operation intention, and therefore the searching efficiency can be improved effectively.

In addition, with the technical solution provided by the present disclosure being employed, since the application-related operation is executed no longer completely depending on the input sequence input by the input method application and thoughts are given to the extended sequence obtained according to the input sequence and the user's user feature data, the operation result can substantially satisfy the user's operation intention, and therefore the user experience can be boosted substantially.

### Brief Description of Drawings

To describe technical solutions of embodiments of the present disclosure more clearly, figures to be used in the embodiments or in depictions regarding the prior art will be described briefly. Obviously, the figures described below are only some embodiments of the present disclosure. Those having ordinary skill in the art appreciate that other figures may be obtained from these figures without making inventive efforts.
Fig. 1 is a flow chart of a method for processing an input sequence according to an embodiment of the present disclosure;
Fig. 2 is a block diagram of an apparatus for processing an input sequence according to another embodiment of the present disclosure;
Fig. 3 is a block diagram of an apparatus for processing an input sequence according to another embodiment of the present disclosure.

### Detailed Description of Preferred Embodiments

To make objectives, technical solutions and advantages of embodiments of the present disclosure clearer, technical solutions of embodiment of the present disclosure will be described clearly and completely with reference to figures in embodiments of the present disclosure. Obviously, embodiments described here are partial embodiments of the present disclosure, not all embodiments. All other embodiments obtained by those having ordinary skill in the art based on the embodiments of the present disclosure, without making any inventive efforts, fall within the protection scope of the present disclosure.

It needs to be appreciated that the terminals involved in the embodiments of the present disclosure comprise but are not limited to a mobile phone, a Personal Digital Assistant (PDA), a wireless handheld device, a tablet computer, a Personal Computer (PC), an MP3 player, an MP4 player, and a wearable device (e.g., a pair of smart glasses, a smart watch, or a smart bracelet).

In addition, the term "and/or" used in the text is only an association relationship depicting associated objects and represents that three relations might exist, for example, A and/or B may represents three cases, namely, A exists individually, both A and B coexist, and B exists individually. In addition, the symbol "/" in the text generally indicates associated objects before and after the symbol are in an "or" relationship.

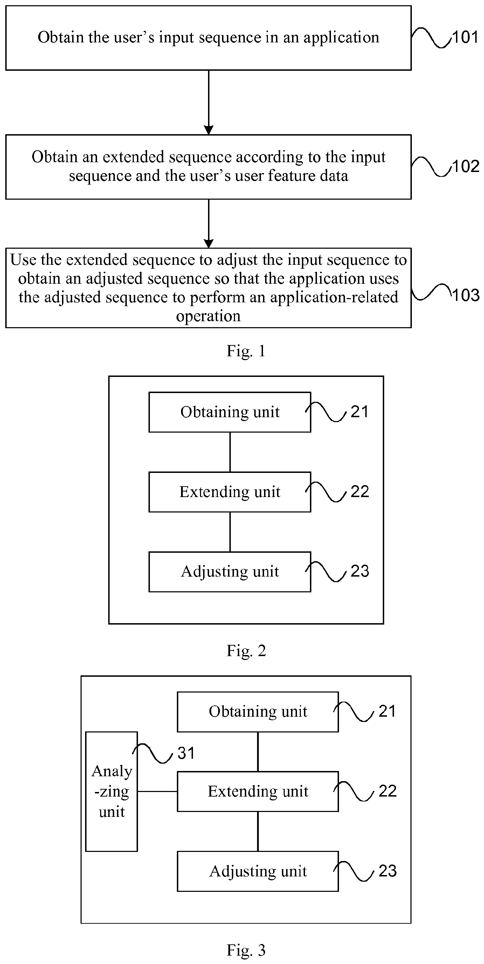

Fig. 1 is a flow chart of a method for processing an input sequence according to an embodiment of the present disclosure.

101: obtaining the user's input sequence in the application.

The so-called user's input sequence may refer to an on-screen item which is input by the user using an input method application.

The so-called input method refers to an encoding method for inputting various characters into a terminal. Different languages, countries and regions have different input methods such as Sogou pinyin input method, Baidu input method and QQ pinyin input method. Generally, the input method application may, according to the user-input character sequence, displays to the user several candidates corresponding to the character sequence so that the user select one candidate as the on-screen item to complete the input operation.

The so-called application may be any other applications in addition to the input method application, for example, applications such as mobile phone Baidu and mobile phone Taobao. This is not particularly limited in the present embodiment.

102: obtaining an extended sequence according to the input sequence and the user's user feature data.

103. using the extended sequence to adjust the input sequence to obtain an adjusted sequence so that the application uses the adjusted sequence to perform an application-related operation.

It needs to be appreciated that subjects for executing 101-103 may partially or totally be an applications located in a local terminal, for example, input method application, mobile phone Baidu application and mobile phone Taobao application, or a function unit such as a plug-in or Software Development Kit (SDK) arranged in an application located at the local terminal, or a processing engine located in a network-side server, or a distributed type system located on the network side. This is not particularly limited in the present embodiment.

It may be understood that the application may be a native application (nativeAPP) installed on the terminal, or a web program (webApp) of a browser on the terminal. This is not particularly limited in the present embodiment.

As such, the user's input sequence in the application is obtained, and then an extended sequence is obtained according to the input sequence and the user's user feature data, so that the extended sequence can be used to adjust the input sequence to obtain an adjusted sequence so that the application uses the adjusted sequence to perform an application-related operation. Since the application-related operation is executed no longer completely depending on the input sequence input by the input method application and thoughts are given to the extended sequence obtained according to the input sequence and the user's user feature data, the operation result can substantially satisfy the user's operation intention. Hence, it is possible to avoid the problem in the prior art about the increase of the data interaction between the application and the application-used processing engine caused by the user browsing the operation result again and again or inputting again and again using the input method application, thereby reducing the processing burden of the search engine.

Optionally, in a possible implementation mode of the present embodiment, before 102, the method may further comprise obtaining the user's user feature data according to the user's application data. The user's application data may include but is not limited to at least one of the user's input data and terminal data of the terminal. This is not particularly limited in the present embodiment.

In the present disclosure, the user's user feature data specifically may include but is not limited to at least one of the following data:
user attribute data; and
environment data of the terminal.

In one aspect, the user attribute data may comprise but not limited to at least one of the following information:
the user's gender;
the user's age;
the user's occupation;
the user's educational background; and
the user's hobby.

In a specific implementation procedure, it is specifically feasible to collect the user's application data including but not limited to the user's input data, then perform analysis and mining for the collected application data to obtain the user's user attribute data to execute 102 according to the user's user attribute data.

Wherein, the user's input data refers to the user-input information such as registration information, blog information, mail information and the like.

For example, it is feasible to collect input data input by the user in all applications in the terminal, or collect input data input by the user in a designated application (e.g., input method application, mobile phone Baidu application) in the terminal. This is not particularly limited in the present embodiment.

It may be appreciated that a specific analysis and mining method employed by the present disclosure may employ any method and strategy in the prior art. Reference may be made to relevant content in the prior art for detailed description, which will not be detailed any more here.

In another aspect, the terminal's environment data may include but not limited to at least one of the terminal's hardware environment data and the terminal's software environment data. This is not particularly limited in the present embodiment.

The terminal's hardware environment data may include but not limited to one or more of the following information: the terminal's equipment type information, the terminal's operating system information, the terminal's network information and the terminal's geographical location information.

For example, the terminal's equipment type information may include a mobile phone, a tablet computer, a personal computer (PC) or the like.

Or, for another example, the terminal's operating system information may comprise Apple's ios operating system, Google's Android operating system or Microsoft's Windows Phone operating system or other mobile terminal operating systems.

Or, for another example, the terminal's network information may include a 3G network or a wireless fidelity (Wi-Fi) network or other wireless networks.

Specifically, the terminal's hardware environment information may be obtained using various solutions in the prior art. Reference may be made to relevant content in the prior art for detailed description, which will not be detailed any more here.

The terminal's software environment data may include but not limited to an application currently run by the terminal. This is not particularly limited in the present embodiment.

For example, in a smart mobile phone, an application (APP) using an input method application for information input, or a webpage in a browser using the input method application for information input; or, for another example, in a personal computer (PC), an application using an input method application for information input, or a webpage in a browser using the input method application for information input.

Specifically, the terminal's software environment information may be obtained using various solutions in the prior art. Reference may be made to relevant content in the prior art for detailed description, which will not be detailed any more here.

In a specific implementation procedure, it is specifically feasible to collect the user's application data including but not limited to the terminal's terminal data, then perform analysis and mining for the collected application data to obtain the terminal's environment data to execute 102 according to the user's terminal's environment data.

Wherein, the terminal's terminal data refers to data of the terminal itself and data of an application installed on the terminal.

Optionally, in possible implementation mode of the present embodiment, in 102, it is specifically feasible to obtain the extended sequence using a pre-built extension model according to the input sequence and the user's user feature data.

Specifically, the extended model may be built by using some training samples to perform training.

It needs to be appreciated that the training samples included in the training sample set may be marked known samples so that it is possible to directly use these known samples to perform training to build the extended model; or, one portion of training samples may be marked known samples, and the remaining portion are samples not yet marked and known. Then, it is feasible to use known samples to perform training first to build an initial extended model, and then use the initial extended model to evaluate the unknown samples to obtain an evaluation result. Then, it is feasible to mark the unknown samples according to the evaluation result of unknown samples to form known samples as newly-added known samples. The newly-added known samples and the original known samples are used to perform training again to build a new extended model until the built extended model or known samples satisfy a cut-off condition of the extended model, for example, a classification accuracy rate is larger than or equal to a preset accuracy rate threshold or the number of known samples is larger than or equal to a preset number threshold. This is not particularly limited in the present embodiment.

Optionally, in a possible implementation mode of the present embodiment, in 103, the extended sequence may be specifically added to the input sequence to obtain the adjusted sequence.

For example, the user's input sequence in mobile phone Baidu application is garment". Then, the extended sequence "female" may be obtained according to the input sequence "garment" and the user's user feature data "gender: female". Then, the extended sequence "female" is added to the input sequence "garment" to obtain the adjusted sequence "garment female" or "female garment". As such, the mobile phone Baidu application may use the adjusted sequence "garment female" or "female garment" to perform the search operation.

Optionally, in a possible implementation mode of the present embodiment, in 103, the input sequence may be specifically modified according to the extended sequence to obtain the adjusted sequence.

For example, the user's input sequence in mobile phone Baidu application is "garment". Then, the extended sequence "female" may be obtained according to the input sequence "garment" and the user's user feature data "gender: female". Then, the input sequence "garment" is amended according to the extended sequence "female" to obtain the adjusted sequence "women's garment". As such, the mobile phone Baidu application may use the adjusted sequence "women's garment" to perform the search operation.

Optionally, in a possible implementation mode of the present embodiment, in 102, it is specifically feasible to judge whether an input scenario of the application is a search input. If the input scenario of the application is the search input, the extended sequence may be obtained according to the input sequence and the user's user feature data. If the input scenario of the application is not the search input, the input and operation of the application may be executed normally.

In the present embodiment, the user's input sequence in the application is obtained, then an extended sequence is obtained according to the input sequence and the user's user feature data, so that the extended sequence can be used to adjust the input sequence to obtain an adjusted sequence so that the application uses the adjusted sequence to perform an application-related operation. Since the application-related operation is executed no longer completely depending on the input sequence input by the input method application and thoughts are given to the extended sequence obtained according to the input sequence and the user's user feature data, the operation result can substantially satisfy the user's operation intention. Hence, it is possible to avoid the problem in the prior art about the increase of the data interaction between the application and the application-used processing engine caused by the user browsing the operation result again and again or inputting again and again using the input method application, thereby reducing the processing burden of the search engine.

In addition, with the technical solution provided by the present disclosure being employed, since the application-related operation is executed no longer completely depending on the input sequence input by the input method application and thoughts are given to the extended sequence obtained according to the input sequence and the user's user feature data, the operation result can substantially satisfy the user's operation intention, and therefore, effectiveness of the operation result can be effectively improved.

In addition, with the technical solution provided by the present disclosure being employed, since the application-related operation is executed no longer completely depending on the input sequence input by the input method application and thoughts are given to the extended sequence obtained according to the input sequence and the user's user feature data, the operation result can substantially satisfy the user's operation intention, and therefore the searching efficiency can be improved effectively.

In addition, with the technical solution provided by the present disclosure being employed, since the application-related operation is executed no longer completely depending on the input sequence input by the input method application and thoughts are given to the extended sequence obtained according to the input sequence and the user's user feature data, the operation result can substantially satisfy the user's operation intention, and therefore the user experience can be boosted substantially.

As appreciated, for ease of description, the aforesaid method embodiments are all described as a combination of a series of actions, but those skilled in the art should appreciated that the present disclosure is not limited to the described order of actions because some steps may be performed in other orders or simultaneously according to the present disclosure. Secondly, those skilled in the art should appreciate the embodiments described in the description all belong to preferred embodiments, and the involved actions and modules are not necessarily requisite for the present disclosure.

In the above embodiments, different emphasis is placed on respective embodiments, and reference may be made to related depictions in other embodiments for portions not detailed in a certain embodiment.

Fig. 2 is a block diagram of an apparatus for processing an input sequence according to another embodiment of the present disclosure. The apparatus for processing the input sequence according to the present embodiment may comprise an obtaining unit 21, an extending unit 22 and an adjusting unit 23, wherein the obtaining unit 21 is configured to obtain the user's input sequence in the application; the extending unit 22 is configured to obtain an extended sequence according to the input sequence and the user's user feature data; the adjusting unit 23 is configured to use the extended sequence to adjust the input sequence to obtain an adjusted sequence so that the application uses the adjusted sequence to perform an application-related operation.

It needs to be appreciated that apparatus for processing the input sequence according to the present embodiment may partially or totally be an application located in a local terminal, or a function unit such as a plug-in or Software Development Kit (SDK) arranged in an application located at the local terminal, or a processing engine located in a network-side server, or a distributed type system located on the network side. This is not particularly limited in the present embodiment.

It may be understood that the application may be a native application (nativeAPP) installed on the terminal, or a web program (webApp) of a browser on the terminal. This is not particularly limited in the present embodiment.

Optionally, in a possible implementation mode of the present embodiment, as shown in Fig. 3, the apparatus for processing the input sequence according to the present embodiment may further comprise an analyzing unit 31 configured to obtain the user's user feature data according to the user's application data, the user's application data including at least one of the user's input data and terminal data of the terminal.

In the present disclosure, the user's user feature data specifically may include but not limited to at least one of the following data:
user attribute data; and
environment data of the terminal.

Optionally, in a possible implementation mode of the present embodiment, the adjusting unit 23 is specifically configured to add the extended sequence to the input sequence to obtain the adjusted sequence.

Optionally, in a possible implementation mode of the present embodiment, the adjusting unit 23 is specifically configured to modify the input sequence according to the extended sequence to obtain the adjusted sequence.

Optionally, in a possible implementation mode of the present embodiment, the extending unit 22 is specifically configured to, if an input scenario of the application is a search input, obtain the extended sequence according to the input sequence and the user's user feature data.

It needs to be appreciated that the method in the embodiment corresponding to Fig. 1 may be implemented by the apparatus for processing the input sequence according to the present embodiment. Reference may be made to relevant resources in the embodiment corresponding to Fig. 1 for detailed description, which will not be detailed any longer here.

In the present embodiment, the obtaining unit obtains the user's input sequence, then the extending unit obtains an extended sequence according to the input sequence and the user's user feature data, so that the adjusting unit can use the extended sequence to adjust the input sequence to obtain an adjusted sequence so that the application uses the adjusted sequence to perform an application-related operation. Since the application-related operation is executed no longer completely depending on the input sequence input by the input method application and thoughts are given to the extended sequence obtained according to the input sequence and the user's user feature data, the operation result can substantially satisfy the user's operation intention. Hence, it is possible to avoid the problem in the prior art about the increase of the data interaction between the application and the application-used processing engine caused by the user browsing the operation result again and again or inputting again and again using the input method application, thereby reducing the processing burden of the search engine.

In addition, with the technical solution provided by the present disclosure being employed, since the application-related operation is executed no longer completely depending on the input sequence input by the input method application and thoughts are given to the extended sequence obtained according to the input sequence and the user's user feature data, the operation result can substantially satisfy the user's operation intention, and therefore, effectiveness of the operation result can be effectively improved.

In addition, with the technical solution provided by the present disclosure being employed, since the application-related operation is executed no longer completely depending on the input sequence input by the input method application and thoughts are given to the extended sequence obtained according to the input sequence and the user's user feature data, the operation result can substantially satisfy the user's operation intention, and therefore the searching efficiency can be improved effectively.

In addition, with the technical solution provided by the present disclosure being employed, since the application-related operation is executed no longer completely depending on the input sequence input by the input method application and thoughts are given to the extended sequence obtained according to the input sequence and the user's user feature data, the operation result can substantially satisfy the user's operation intention, and therefore the user experience can be boosted substantially.

Those skilled in the art can clearly understand that for purpose of convenience and brevity of depictions, reference may be made to corresponding procedures in the aforesaid method embodiments for specific operation procedures of the system, apparatus and units described above, which will not be detailed any more.

In the embodiments provided by the present disclosure, it should be understood that the revealed system, apparatus and method can be implemented in other ways. For example, the above-described embodiments for the apparatus are only exemplary, e.g., the division of the units is merely logical one, and, in reality, they can be divided in other ways upon implementation. For example, a plurality of units or components may be combined or integrated into another system, or some features may be neglected or not executed. In addition, mutual coupling or direct coupling or communicative connection as displayed or discussed may be indirect coupling or communicative connection performed via some interfaces, means or units and may be electrical, mechanical or in other forms.

The units described as separate parts may be or may not be physically separated, the parts shown as units may be or may not be physical units, i.e., they can be located in one place, or distributed in a plurality of network units. One can select some or all the units to achieve the purpose of the embodiment according to the actual needs.

Further, in the embodiments of the present disclosure, functional units can be integrated in one processing unit, or they can be separate physical presences; or two or more units can be integrated in one unit. The integrated unit described above can be implemented in the form of hardware, or they can be implemented with hardware plus software functional units.

The aforementioned integrated unit in the form of software function units may be stored in a computer readable storage medium. The aforementioned software function units are stored in a storage medium, including several instructions to instruct a computer device (a personal computer, server, or network equipment, etc.) or processor to perform some steps of the method described in the various embodiments of the present disclosure. The aforementioned storage medium includes various media that may store program codes, such as U disk, removable hard disk, read-only memory (ROM), a random access memory (RAM), magnetic disk, or an optical disk.

Finally, it is appreciated that the above embodiments are only used to illustrate the technical solutions of the present disclosure, not to limit the present disclosure; although the present disclosure is described in detail with reference to the above embodiments, those having ordinary skill in the art should understand that they still can modify technical solutions recited in the aforesaid embodiments or equivalently replace partial technical features therein; these modifications or substitutions do not make essence of corresponding technical solutions depart from the spirit and scope of technical solutions of embodiments of the present disclosure.

## Claims

1. A method for processing an input sequence, comprising:
obtaining the user's input sequence in an application;
obtaining an extended sequence according to the input sequence and the user's user feature data;
using the extended sequence to adjust the input sequence to obtain an adjusted sequence so that the application uses the adjusted sequence to perform an application-related operation.

2. The method according to claim 1, wherein the user's user feature data includes at least one of the following data:
user attribute data; and
environment data of a terminal.

3. The method according to claim 1 or 2, wherein before obtaining the extended sequence according to the input sequence and the user's user feature data, the method further comprises:
obtaining the user's user feature data according to the user's application data, the user's application data including at least one of the user's input data and terminal data of the terminal.

4. The method according to any one of claims 1-3, wherein the using the extended sequence to adjust the input sequence to obtain an adjusted sequence comprises:
adding the extended sequence to the input sequence to obtain the adjusted sequence; or
modifying the input sequence according to the extended sequence to obtain the adjusted sequence.

5. The method according to any one of claims 1-4, wherein the obtaining an extended sequence according to the input sequence and the user's user feature data comprises:
if an input scenario of the application is a search input, obtaining the extended sequence according to the input sequence and the user's user feature data.

6. An apparatus for processing an input sequence, comprising:
an obtaining unit configured to obtain the user's input sequence in an application;
an extending unit configured to obtain an extended sequence according to the input sequence and the user's user feature data;
an adjusting unit configured to use the extended sequence to adjust the input sequence to obtain an adjusted sequence so that the application uses the adjusted sequence to perform an application-related operation.

7. The apparatus according to claim 6, wherein the user's user feature data includes at least one of the following data:
user attribute data; and
environment data of a terminal.

8. The apparatus according to claim 6 or 7, wherein the apparatus further comprises an analyzing unit configured to:
obtain the user's user feature data according to the user's application data, the user's application data including at least one of the user's input data and terminal data of the terminal.

9. The apparatus according to any of claims 6-8, wherein the adjusting unit is specifically configured to:
add the extended sequence to the input sequence to obtain the adjusted sequence; or
modify the input sequence according to the extended sequence to obtain the adjusted sequence.

10. The apparatus according to any of claims 6-9, wherein the extending unit is specifically configured to:
if an input scenario of the application is a search input, obtain the extended sequence according to the input sequence and the user's user feature data.

11. An apparatus, comprising
one or more processors;
a memory;
one or more programs stored in the memory and configured to execute the following operations when executed by the one or more processors:
obtaining the user's input sequence in an application;
obtaining an extended sequence according to the input sequence and the user's user feature data;
using the extended sequence to adjust the input sequence to obtain an adjusted sequence so that the application uses the adjusted sequence to perform an application-related operation.

12. A non-volatile computer storage medium in which one or more programs are stored, an apparatus being enabled to execute the following operation when said one or more programs are executed by the apparatus:
obtaining the user's input sequence in an application;
obtaining an extended sequence according to the input sequence and the user's user feature data;
using the extended sequence to adjust the input sequence to obtain an adjusted sequence so that the application uses the adjusted sequence to perform an application-related operation.
